# FASCICULE DE BREVET EUROPEEN

(11) **EP 4 201 582 B1**
(45) Date de publication et mention de la délivrance du brevet: **24.07.2024**
(21) Numéro de dépôt: 22213557.6
(22) Date de dépôt: 14.12.2022
(51) Int. Cl.: B23P 19/06, B23Q 3/155, B23Q 3/157

(54) **SYSTÈME DE FIXATION D'UN EMBOUT D'OUTILLAGE À UN OUTIL ET PROCÉDÉ DE FIXATION CORRESPONDANT**
SYSTEM ZUR BEFESTIGUNG EINES WERKZEUGEINSATZES AN EINEM WERKZEUG UND BEFESTIGUNGSVERFAHREN DAFÜR
SYSTEM FOR ATTACHING A TOOL BIT TO A TOOL AND METHOD FOR FIXING THE SAME

(30) Priorité: 22.12.2021 FR 2114258
(43) Date de publication de la demande: 28.06.2023
(73) Titulaire: Etablissements Georges Renault, 44800 Saint Herblain (FR)
(72) Inventeur: ROBINEAU, Aurélien, 44850 Saint Mars du Desert (FR); LERAT, Eddie, 44360 Vigneux de Bretagne (FR)
(74) Mandataire: Vidon Brevets & Stratégie

(56) Documents cités:
- FR-A1- 2 555 927
- US-A- 5 068 958
- US-A1- 2009 139 375
- US-A1- 2017 304 908
- US-A1- 2018 141 172

## Description

### 1. Domaine de l'invention

Le domaine de l'invention est celui des techniques mises en oeuvre pour assurer la mise en place d'un embout d'outil, comme par exemple un embout de vissage ou autre, à l'extrémité d'un outil.

Plus précisément, l'invention concerne un dispositif destiné à être mis en oeuvre pour fixer un embout d'outillage à un outil ou pour recueillir un embout d'outillage après qu'il ait été désolidarisé de l'outil et un procédé de fixation correspondant.

L'invention trouve notamment mais pas exclusivement son application dans le domaine des robots, cobots (ou robots collaboratifs), ou table X-Y-Z.

### 2. Art antérieur

Des outils à embouts interchangeables sont couramment utilisés dans divers domaines d'activité pour oeuvrer à la réalisation de tâches diverses. On utilise par exemple des visseuses à l'extrémité desquelles l'on peut rapporter des embouts de vissage de différente taille choisies selon le type et la dimension de l'élément à entrainer en mouvement pour le serrer ou bien le desserrer.

L'Homme du métier cherche à améliorer la technique existante de sorte à réduire les manipulations à effectuer par un utilisateur.

On connaît notamment des techniques dans lesquelles des boîtes à embouts automatiques sont mises en oeuvre.

Par exemple, on connaît des documents US 2018 141172 et US 2009 139 375 des solutions de changement d'embouts d'outil mettant en oeuvre un actionneur pneumatique qui est ménagé côté outil ou côté boîtier à embout. Cet actionneur pneumatique est mis en oeuvre de sorte à engager l'embout d'outil sur l'outil ou à le désengager.

Toutefois, ces solutions s'avèrent complexes à mettre en oeuvre, et sont également onéreuses tant à réaliser que pour la maintenance régulière.

En effet, il est relativement difficile d'intégrer de telles solutions sur des lignes de production du fait de la présence des actionneurs qui nécessitent un pilotage pneumatique voire électrique ce qui implique une éventuelle amenée d'énergie et donc une modification importante des lignes ce qui n'est pas satisfaisant.

En outre, ces solutions sont susceptibles de tomber en panne et nécessitent donc une maintenance importante du fait des actionneurs, ce qui engendre également un coût supplémentaire ainsi que de la perte de temps ce qui n'est pas satisfaisant.

On connaît également des solutions mettant en oeuvre des moyens de solidarisation réversible d'un porte embout à un embout ménagé sur un support d'embout, qui peuvent prendre un état verrouillé et un état déverrouillé et qui sont configurés pour passer de l'un à l'autre de leurs états par un mouvement relatif du support d'embout par rapport au porte embout suivant un unique axe.

Le document de brevet FR-A1-2 555 927 décrit une technique de ce type.

Toutefois, une telle solution nécessite la mise en oeuvre de nombreuses pièces ce qui représente un coût supplémentaire en termes de mise en oeuvre ce qui n'est pas satisfaisant.

En outre, un tel nombre de pièces engendre également un surplus de maintenance ce qui engendre également un coût supplémentaire ainsi que de la perte de temps ce qui n'est pas satisfaisant.

Il existe donc un besoin d'améliorer de tels systèmes, tant en termes de coût de revient que de fiabilité et de durée de vie.

### 3. Exposé de l'invention

L'invention répond à ce besoin en proposant un système de fixation d'un embout d'outillage à un outil selon la revendication 1, ledit système comprenant :
- un boîtier à embouts comprenant une pluralité de supports d'embouts, lesdits supports d'embouts étant mobiles et portant chacun un embout, chaque embout présentant une première extrémité de travail et une deuxième extrémité ;
- un porte embout présentant une première extrémité apte à être solidarisée à une extrémité dudit outil et une deuxième extrémité configurée pour être solidarisée avec ladite deuxième extrémité de chacun desdits embouts ;
- des moyens de solidarisation réversibles dudit embout audit porte embout,

ledit embout pouvant prendre au moins deux états par rapport audit porte embout :
   - un état verrouillé dans lequel ledit embout est engagé sur ledit porte embout et est à distance dudit support d'embout, et
   - un état libéré dans lequel ledit embout est à distance dudit porte embout et repose sur ledit support d'embout,
le passage dudit état libéré audit état verrouillé se faisant par la combinaison d'un premier mouvement selon l'axe Z de rotation de l'outil dudit porte embout vers ledit support d'embout de sorte à ce que ledit porte embout soit solidarisé audit embout, et d'un deuxième mouvement dudit porte embout entrainant avec lui ledit support d'embout, de sorte à ce que l'embout soit verrouillé sur ledit porte embout.

De ce fait, l'invention permet de réaliser un changement d'embout en ne mettant en oeuvre que des déplacements usuels simples, ce qui donne l'avantage de pouvoir être utilisé avec n'importe quel robot ou cobot, et ce sans mettre en oeuvre d'actionneur supplémentaire.

Cela permet en outre, de ce fait, de mettre en oeuvre une solution présentant un encombrement limité et avec des moyens simples, par exemple des embouts classiques qui peuvent être achetés dans le commerce.

Selon un aspect d'au moins un mode de réalisation de l'invention, lesdits supports d'embouts 2 sont montés mobiles en translation dans un plan P perpendiculaire à l'axe Z de rotation de l'outil, le passage dudit état libéré audit état verrouillé se faisant par la combinaison d'une translation dudit porte embout 4 selon l'axe Z, et d'une translation dans le plan P, entrainant avec lui ledit support d'embout 2, de sorte à ce que ledit porte embout 4 vienne en vis-à-vis dudit support d'embout 2 et que l'embout 3 soit engagé et verrouillé sur ledit porte embout 4.

Selon un aspect d'au moins un mode de réalisation de l'invention, ledit porte embout est monté mobile en translation selon un axe X perpendiculaire à l'axe Z de rotation de l'outil, le passage dudit état libéré audit état verrouillé se faisant par la combinaison d'une translation dudit porte embout 4 selon l'axe Z, et d'une translation selon l'axe X, entrainant avec lui ledit support d'embout 2, de sorte à ce que ledit porte embout 4 vienne en vis-à-vis dudit support d'embout 2 et que l'embout 3 soit engagé et verrouillé sur ledit porte embout 4.

Selon un aspect d'au moins un mode de réalisation de l'invention, lesdits moyens de solidarisation réversibles comprennent :
- un élément de verrouillage ménagé dans ledit porte embout et mobile entre au moins une position libérée dans laquelle il n'agit pas sur ledit embout, et une position de verrouillage dans laquelle il vient se loger dans des moyens de verrouillage dudit embout, ledit élément de verrouillage et lesdits moyens de verrouillage dudit embout présentant une forme complémentaire ;
- un élément expanseur mobile entre au moins une position déployée dans laquelle il maintient l'élément de verrouillage en position de verrouillage dans lesdits moyens de verrouillage dudit embout, et une position repliée dans laquelle il n'agit pas sur ledit élément de verrouillage, et
- un élément d'activation solidaire de l'élément expanseur et ménagé sur le pourtour dudit porte embout.

Selon un aspect d'au moins un mode de réalisation de l'invention, l'élément de verrouillage comprend des billes ménagées dans le porte embout, sur le pourtour de l'élément expanseur.

Selon un aspect d'au moins un mode de réalisation de l'invention, ledit élément d'activation est une bague ménagée sur le pourtour dudit porte embout et solidaire dudit élément de verrouillage.

Selon un aspect d'au moins un mode de réalisation de l'invention, ledit élément expanseur comprend une tige mobile entre au moins une position déployée dans laquelle elle maintient l'élément de verrouillage en position de verrouillage dans lesdits moyens de verrouillage dudit embout, et une position repliée dans laquelle elle n'agit pas sur ledit élément de verrouillage.

Selon un aspect d'au moins un mode de réalisation de l'invention, ledit boîtier à embouts comporte une surface supérieure d'appui sur laquelle sont formées des ouvertures ménagées chacune en vis-à-vis de chacun desdits embouts, chacune desdites ouvertures présentant :
- une première portion ayant un diamètre inférieur à un diamètre dudit élément d'activation, et ayant un diamètre supérieur à un diamètre dudit embout ;
- une deuxième portion ménagée dans la continuité de ladite première portion et ayant un diamètre supérieur à un diamètre dudit élément d'activation.

Selon un aspect d'au moins un mode de réalisation de l'invention, le boîtier à embouts comprend entre deux et huit supports d'embouts, préférentiellement quatre supports d'embouts.

Selon un aspect d'au moins un mode de réalisation de l'invention, chacun des supports d'embout comprend en outre au moins un capteur appartenant au groupe comprenant :
- un capteur de présente d'un embout en contact avec le support d'embout associé ;
- un capteur de détection de la position d'un embout par rapport à un porte embout ;
- un capteur de présence du support d'embout à la verticale de la première portion de l'ouverture, et
- un capteur de présence de l'embout à la verticale de la première portion de l'ouverture.

L'invention concerne également un procédé de fixation d'un embout d'outillage à un outil selon la revendication 11 mis en oeuvre par un système de fixation d'un embout d'outillage à un outil selon la revendication 8 mettant er oeuvre les étapes successives suivantes :
- une étape de prédétermination d'un embout à fixer sur le porte embout ;
- une étape de positionnement dudit porte-embout au contact de ladite surface supérieure d'appui, en vis-à-vis de la première portion de l'ouverture correspondant à l'embout prédéterminé, de sorte à être à la verticale dudit embout ;
- une première étape de translation dudit porte embout selon ledit axe de sorte à ce que ladite deuxième extrémité dudit porte embout soit solidarisée avec ladite deuxième extrémité de l'embout prédéterminé, ledit élément d'activation restant au contact de ladite surface supérieure d'appui ;
- simultanément, une étape de passage de l'élément de verrouillage à la position libérée dans laquelle il vient se loger dans des moyens de verrouillage de l'embout prédéterminé ;
- une deuxième étape de déplacement dudit porte embout, ledit porte embout entrainant en mouvement ledit support d'embout et ledit embout prédéterminé jusqu'à ce que ledit porte-embout et ledit embout soient positionnés en regard de ladite deuxième portion de l'ouverture ;
- une étape de passage de l'élément expanseur de ladite position repliée à ladite position déployée dans laquelle il maintient l'élément de verrouillage en position de verrouillage dans lesdits moyens de verrouillage dudit embout ledit élément d'activation étant translaté simultanément selon l'axe Z de sorte à venir en regard dudit embout prédéterminé,
- une étape d'extraction de l'embout par translation dudit porte embout selon ledit axe Z jusqu'à ce que ledit porte embout soit à distance dudit boîtier d'embout.

Selon un aspect d'au moins, l'élément de verrouillage passe d'une position quelconque à la position libérée dans laquelle il vient se loger dans des moyens de verrouillage de l'embout prédéterminé.

Selon un aspect d'au moins, l'élément de verrouillage passe de la position escamotée à la position libérée dans laquelle il vient se loger dans des moyens de verrouillage de l'embout prédéterminé.

Selon un aspect d'au moins un mode de réalisation de l'invention, le procédé comprend en outre les étapes successives suivantes, pour retirer l'embout dudit outil :
- une étape de positionnement dudit porte-embout à la verticale de ladite deuxième portion de l'ouverture associée à l'embout, de sorte que ledit élément d'activation soit au niveau de ladite surface supérieure d'appui;
- une troisième étape de déplacement dudit porte embout jusqu'à ce que ledit porte-embout soit positionné en regard de ladite première portion de l'ouverture et dudit support d'embout ;
- une quatrième étape de translation dudit porte embout selon ledit axe Z de sorte à ce que ledit embout prédéterminé soit placé sur le support d'embout associé ;
- une étape de dépose dudit embout sur ledit support d'embout associé ;
- une cinquième étape de translation dudit porte embout selon ledit axe Z jusqu'à ce que ledit porte embout soit à distance dudit boîtier d'embout.

### 4. Description des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
[Fig 1] illustre en perspective de devant un boîtier d'embout muni de quatre supports d'embouts selon un mode de réalisation de l'invention ;
[Fig 2a] illustre également en perspective de devant un boîtier d'embout muni de quatre supports d'embouts selon le mode de réalisation de la figure 1 ;
[Fig 2b] illustre en perspective de derrière un boîtier d'embout muni de quatre supports d'embouts selon le mode de réalisation de la figure 1 ;
[Fig 3] illustre en coupe de côté un outil et un boîtier selon un mode de réalisation de l'invention ; [Fig 4a] illustre en coupe de côté une partie du procédé de fixation d'un embout d'outillage à un outil selon un mode de réalisation de l'invention ;
[Fig 4b] illustre en coupe de côté une partie suivante du procédé de fixation d'un embout d'outillage à un outil selon le mode de réalisation de la figure 4a ;
[Fig 4c] illustre en coupe de côté une partie suivante du procédé de fixation d'un embout d'outillage à un outil selon le mode de réalisation de la figure 4b ;
[Fig 5a] illustre en coupe de côté une partie suivante du procédé de fixation d'un embout d'outillage à un outil selon le mode de réalisation de la figure 4c ;
[Fig 5b] illustre en coupe de côté une partie suivante du procédé de fixation d'un embout d'outillage à un outil selon le mode de réalisation de la figure 5a ;
[Fig 5c] illustre en coupe de côté une partie suivante du procédé de fixation d'un embout d'outillage à un outil selon le mode de réalisation de la figure 5b ;
[Fig 6a] illustre en coupe de côté une partie suivante du procédé de fixation d'un embout d'outillage à un outil, à savoir le retrait de l'embout, selon un mode de réalisation de l'invention ;
[Fig 6b] illustre en coupe de côté une partie suivante du procédé de fixation d'un embout d'outillage à un outil, à savoir le retrait de l'embout, selon le mode de réalisation de la figure 6a ;
[Fig 6c] illustre en coupe de côté une partie suivante du procédé de fixation d'un embout d'outillage à un outil, à savoir le retrait de l'embout, selon le mode de réalisation de la figure 6b ;
[Fig 7a] illustre en coupe de côté une partie suivante du procédé de fixation d'un embout d'outillage à un outil, à savoir le retrait de l'embout, selon le mode de réalisation de la figure 6c, et
[Fig 7b] illustre en coupe de côté une partie suivante du procédé de fixation d'un embout d'outillage à un outil, à savoir le retrait de l'embout, selon le mode de réalisation de la figure 7a.

### 5. Description détaillée d'un mode de réalisation de l'invention

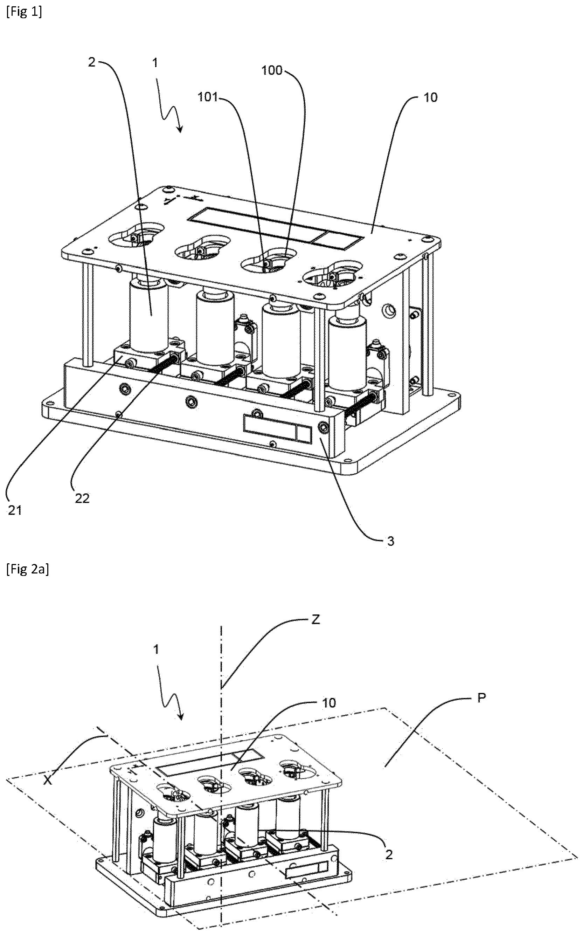

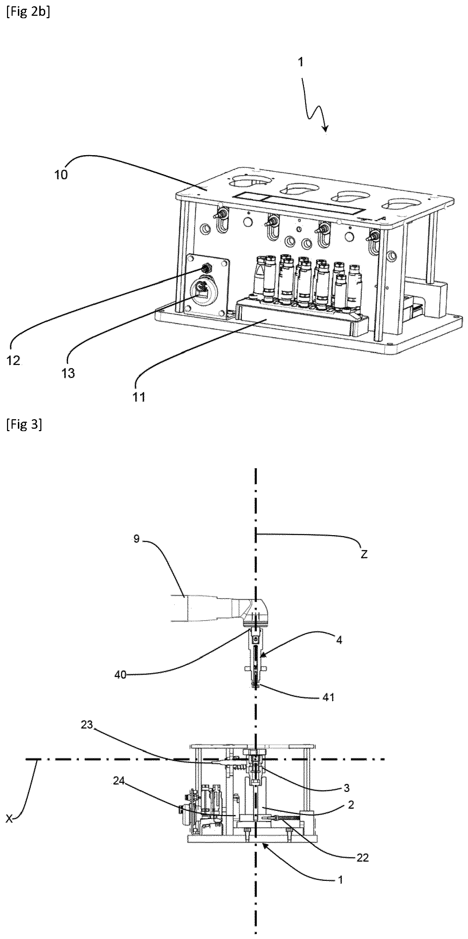

On présente maintenant, en relation avec les figures 1 à 7b, un mode de réalisation de l'invention en tant que système et procédé.

L'invention concerne un système de fixation d'un embout d'outillage à un outil 9.

L'outil peut par exemple être une visseuse à l'extrémité de laquelle on souhaite fixer un embout de vissage qui peut être cruciforme ou plat, ou toute autre forme (dans l'exemple présenté, il s'agit d'un embout hexagonal femelle). Cet embout de vissage peut être de différentes tailles choisies selon le type et la dimension de l'élément à entrainer en mouvement pour serrer ou desserrer cet élément.

Le système comprend un boîtier à embouts 1, un porte embout 4, et des moyens de solidarisation réversibles de l'embout au porte embouts.

Le système comprend donc un boîtier à embouts 1, plus particulièrement illustré aux figures 1 à 2b. Dans ce mode de réalisation, le boîtier est de forme parallélépipédique et comprend quatre supports d'embouts 2.

Toutefois, selon d'autres modes de réalisation non limitatifs, le boîtier à embouts pourrait comprendre par exemple entre un et seize supports d'embouts, ou entre deux et huit supports d'embouts, ou entre trois et six supports d'embouts.

Comme illustré sur ces figures, ce boîtier à embouts 1 comporte une surface supérieure d'appui 10 sur laquelle sont formées des ouvertures ménagées chacune en vis-à-vis de chacun des supports d'embouts 2.

Chacune de ces ouvertures présente une première portion 100 et une deuxième portion 101, ménagée dans la continuité de la première portion 100, et ayant un diamètre supérieur à un diamètre de la première portion.

Ces ouvertures présentent ici une forme de serrure. Toutefois, on pourrait également prévoir d'autres modes de réalisations dans lesquels la forme de ces ouvertures serait différente. On pourrait également prévoir des modes de réalisation dans lesquels les ouvertures ne présenteraient pas toutes la même forme.

Le boîtier d'embout 1 du mode de réalisation présenté comprend en outre des moyens d'alimentation 11, pour alimenter notamment des capteurs, ainsi que des moyens de connexion, qui peuvent par exemple comprendre un connecteur Ethernet 12 ou un connecteur M8 13.

Les supports d'embouts 2 sont montés mobiles en translation selon un axe X et sont configurés pour porter chacun un embout 3.

Plus particulièrement chaque embout 3 présente une première extrémité de travail et une deuxième extrémité. Les supports d'embouts 2 sont configurés de sorte à pouvoir accueillir la première extrémité de travail. De cette manière la deuxième extrémité de chacun des embouts est placée en vis-à-vis de chacun des ouvertures de la surface supérieure d'appui 10.

De sorte à être mobiles en translation, chacun des supports d'embouts 2 est monté sur un chariot 21 qui est guidé par le biais d'une tige 22 positionnée selon l'axe X.

Selon le mode de réalisation illustré, chacun des supports d'embout 2 comprend en outre deux capteurs 23, 24 appartenant au groupe comprenant :
- un capteur de présente d'un embout en contact avec le support d'embout 2 associé ;
- un capteur de détection de la position d'un embout 3 par rapport à un porte embout ;
- un capteur de présence du support d'embout à la verticale de la première portion de l'ouverture, et
- un capteur de présence de l'embout à la verticale de la première portion de l'ouverture.
Toutefois, selon des variantes du mode de réalisation illustré, chacun des supports d'embout pourrait comprendre un seul capteur, ou plus de deux capteurs appartenant à ce groupe de capteurs.

Le système comprend également un porte embout 4 qui présente une première extrémité 40 apte à être solidarisée à une extrémité de l'outil 9 ainsi qu'une deuxième extrémité 41 configuré pour être solidarisée avec la deuxième extrémité de chacun des embouts 3.

Selon l'invention, l'embout 3 peut prendre au moins deux états par rapport au porte embout 4 :
- un état verrouillé dans lequel l'embout 3 est engagé sur le porte embout 4 et est à distance du support d'embout 2, et
- un état libéré dans lequel l'embout 3 est à distance du porte embout 4 et engagé sur le support d'embout 2.

Ce passage de l'état libéré à l'état verrouillé se fait, dans ce mode de réalisation, par la combinaison d'une translation selon un axe Z sensiblement perpendiculaire à l'axe X du porte embout 4, et d'une translation selon l'axe X du support d'embout 2 et du porte embout 4, de sorte à ce que le porte embout 4 vienne en vis-à-vis du support d'embout 2 et que l'embout 3 soit engagé sur le porte embout 4.

En d'autres termes, le passage de l'état verrouillé à l'état libéré de l'embout 3 dans le porte embout 4 se fait par une combinaison d'une translation selon un axe Z sensiblement perpendiculaire à l'axe X du porte embout 4, de sorte à ce que le porte embout se retrouve à la verticale de l'embout 3, et que la deuxième extrémité 41 du porte embout soit solidarisée avec la deuxième extrémité de l'embout 3 sélectionné (ou prédéterminé), puis d'une translation selon l'axe X du support d'embout 2 et du porte embout 4, de sorte à ce que l'embout 3 soit verrouillé sur le porte embout 4 par le biais des moyens de solidarisation.

Il est à noter que cet axe Z correspond, dans un mode de réalisation préférentiel, à l'axe de rotation de l'outil et du porte embout.

Toutefois, selon d'autres modes de réalisations non représentés, le passage dudit état libéré audit état verrouillé pourrait se faire par la combinaison d'un premier mouvement dudit porte embout vers ledit support d'embout de sorte à ce que ledit porte embout vienne en vis-à-vis dudit support d'embout, et d'un deuxième mouvement dudit porte embout entrainant avec lui ledit support d'embout, de sorte à ce que l'embout soit engagé et verrouillé sur ledit porte embout.
De sorte à solidariser un embout 3 au porte embout 4, le système comprend donc des moyens de solidarisation réversibles de l'embout 3 au porte embout 4.

Dans le mode de réalisation illustré ici, les moyens de solidarisation réversibles comprennent :
- un élément de verrouillage 50 ménagé dans le porte embout 4 ;
- un élément expanseur 51 ménagé également dans le porte embout 4, et
- un élément d'activation 52 solidaire de l'élément expanseur 51 et ménagé sur le pourtour du porte embout 4.

L'élément de verrouillage 50 est monté mobile entre au moins une position libérée dans laquelle il n'agit pas sur l'embout 3, et une position de verrouillage dans laquelle il vient se loger dans des moyens de verrouillage 30 de l'embout 3. Il est à noter que l'élément de verrouillage 50 et les moyens de verrouillage 30 de l'embout 3 présentent une forme complémentaire, de sorte à ce que le verrouillage et le maintien en position soient optimaux.

Dans ce mode de réalisation, l'élément de verrouillage 50 comprend des billes ménagées dans le porte embout, sur le pourtour de l'élément expanseur 51. De ce fait, dans ce mode de réalisation, les moyens de verrouillage 30 de l'embout sont des logements correspondant à la taille de chacune des billes de sorte que celles-ci viennent chacune se loger dans un logement prévu dans l'embout 3.

Il est à noter que dans d'autres modes de réalisation, tout moyen de verrouillage connu de l'Homme du métier et qui serait adaptable de sorte à ce l'élément de verrouillage puisse venir se loger dans les moyens de verrouillage est envisageable.

Quant à l'élément expanseur 51, il est monté mobile entre au moins une position déployée dans laquelle il maintient l'élément de verrouillage 50 en position de verrouillage dans les moyens de verrouillage 30 de l'embout 3, et une position repliée dans laquelle il n'agit pas sur l'élément de verrouillage 50.

Dans ce mode de réalisation, l'élément expanseur 51 comprend une tige mobile entre au moins une position déployée dans laquelle elle maintient l'élément de verrouillage 50, qui comprend ici des billes, en position de verrouillage dans les moyens de verrouillage 30 de l'embout 3, qui sont dans ce mode de réalisation des logements pour les billes, et une position repliée dans laquelle la tige n'agit pas sur l'élément de verrouillage 50, du fait qu'elle est rétractée à l'intérieur du porte embout 4.

Toutefois, dans d'autres modes de réalisation, tout élément expanseur connu de l'Homme du métier et qui serait adaptable de sorte à venir agir sur l'élément de verrouillage pour le maintenir dans les moyens de verrouillage est envisageable.

La position déployée correspond ici à une position dans laquelle la tige est en partie logée dans l'embout, et plus particulièrement dans un canal de l'embout placé en vis-à-vis de la tige. La position repliée correspond quant à elle à une position dans laquelle la tige est intégralement située dans le porte embout 4.

De son côté, l'élément d'activation 52 est, dans ce mode de réalisation, une bague ménagée sur le pourtour du porte embout 4 et solidaire de l'élément de verrouillage 50.

De manière logique, l'élément d'activation présente donc un diamètre supérieur au diamètre du porte embout 4 du fait qu'il est ménagé sur le pourtour.

En outre, les moyens de solidarisation sont dimensionnés de telle sorte que :
- la première portion 100 a un diamètre inférieur à un diamètre de l'élément d'activation 52, et a un diamètre supérieur à un diamètre de l'embout 3 ;
- la deuxième portion 101, ménagée dans la continuité de la première portion 100, a un diamètre supérieur à un diamètre de l'élément d'activation 52.

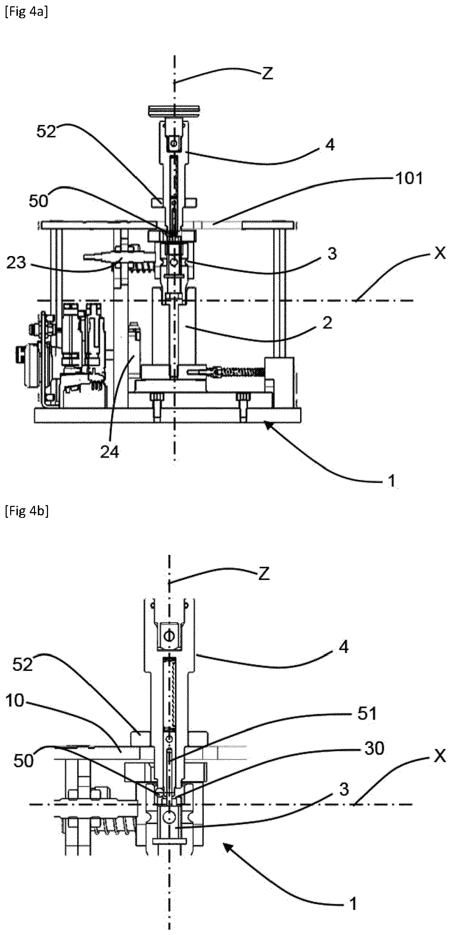

On présente maintenant, en relation avec les figures 4a à 7b, un mode de réalisation d'un procédé de fixation d'un embout d'outillage à un outil mis en oeuvre par un système de fixation d'un embout d'outillage à un outil selon le mode de réalisation présenté ci-dessus.

Comme illustré, le procédé de fixation d'un embout d'outillage à un outil met en oeuvre les étapes successives suivantes :
- une étape de prédétermination d'un embout 3 à fixer sur le porte embout 4 ;
- une étape de positionnement du porte-embout 4 au contact de la surface supérieure d'appui 10, en vis-à-vis de la première portion 100 de l'ouverture correspondant à l'embout prédéterminé, de sorte à être à la verticale de l'embout 3 ;
- une première étape de translation du porte embout selon l'axe Z de sorte à ce que la deuxième extrémité 41 du porte embout 4 soit solidarisée avec la deuxième extrémité de l'embout 3 prédéterminé ;
- une étape de passage de l'élément de verrouillage 50 de la position escamotée à ladite position libérée dans laquelle il vient se loger dans les moyens de verrouillage 30 de l'embout 3 prédéterminé ;
- une deuxième étape de translation du porte embout 4 selon l'axe de translation X du support d'embout 2, le porte embout entrainant dans sa translation le support d'embout 2 et l'embout 3 prédéterminé jusqu'à ce que le porte-embout 4 et l'embout 3 soient positionnés en regard de la deuxième portion 101 de l'ouverture ;
- simultanément, une étape de passage de l'élément expanseur 51 de la position repliée à la position déployée dans laquelle il maintient l'élément de verrouillage 50 en position de verrouillage dans les moyens de verrouillage 30 de l'embout 3, ledit élément d'activation 52 étant translaté simultanément selon l'axe Z de sorte à venir en regard dudit embout 3 prédéterminé,
- une étape d'extraction de l'embout 3 par translation du porte embout 4 selon l'axe Z jusqu'à ce que le porte embout 4 soit à distance du boîtier d'embout 1.

Toutefois, selon d'autres modes de réalisations non représentés, le procédé pourrait comprendre, au lieu des première et deuxième étapes de translation, des étapes d'un premier et d'un deuxième mouvement dudit porte embout, le premier mouvement dudit porte embout étant vers ledit support d'embout de sorte à ce que ledit porte embout vienne en vis-à-vis dudit support d'embout, et le deuxième mouvement dudit porte embout entrainant avec lui ledit support d'embout, de sorte à ce que l'embout soit engagé et verrouillé sur ledit porte embout.

Il est à noter que, dans ces modes de réalisation non illustrés ici, le mouvement pourrait par exemple être un mouvement curviligne, formé de plusieurs mouvements rectilignes, voire même hélicoïdal.

On détaille ci-après les différentes étapes du procédé présenté ci-dessus, à l'appui des figures 4a à 5c.

La figure 4a illustre l'étape de positionnement du porte-embout 4 au contact de la surface supérieure d'appui 10, en vis-à-vis de la première portion 100 de l'ouverture correspondant à l'embout prédéterminé, de sorte à être à la verticale de l'embout 3 prédéterminé.

La figure 4b illustre la première étape de translation du porte embout selon l'axe Z de sorte à ce que la deuxième extrémité 41 du porte embout 4 soit solidarisée avec la deuxième extrémité de l'embout 3 prédéterminé.

Lors de cette première étape de translation, et comme illustré sur cette figure 4b, l'élément d'activation 52 reste au contact de la surface supérieure d'appui 10.

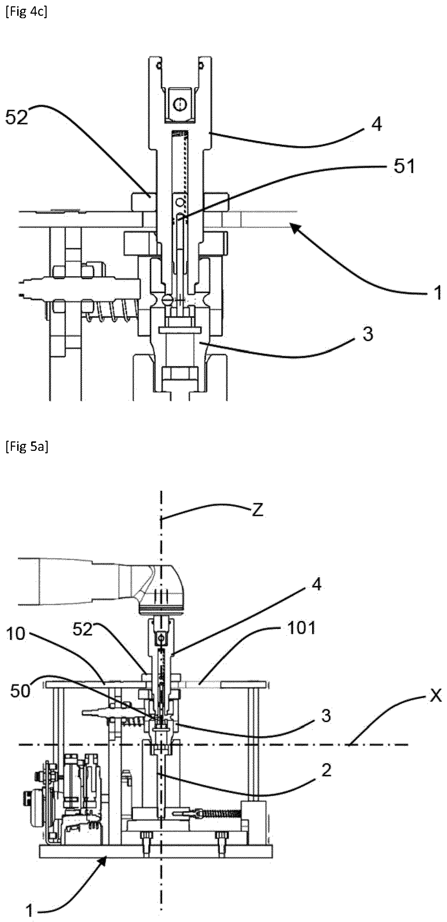

La figure 4c illustre l'étape de passage de l'élément de verrouillage 50 de la position escamotée à ladite position libérée dans laquelle il vient se loger dans les moyens de verrouillage 30 de l'embout 3 prédéterminé.

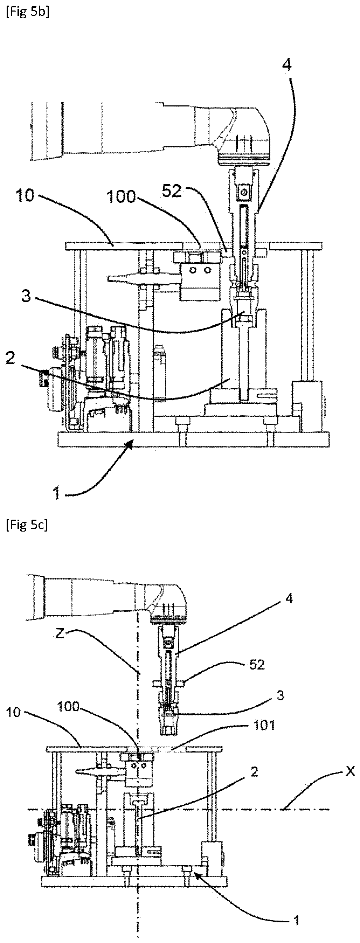

Les figures 5a et 5b illustrent la deuxième étape de translation du porte embout 4 selon l'axe de translation X du support d'embout 2, et simultanément l'étape de passage de l'élément expanseur 51 de la position repliée à la position déployée.

Lors de la deuxième étape de translation du porte embout 4 selon l'axe de translation X du support d'embout 2, le porte embout entrainant dans sa translation le support d'embout 2 et l'embout 3 prédéterminé jusqu'à ce que le porte-embout 4 et l'embout 3 soient positionnés en regard de la deuxième portion 101 de l'ouverture.

Simultanément, cela entraine le passage de l'élément expanseur 51 de la position repliée à la position déployée dans laquelle il maintient l'élément de verrouillage 50 en position de verrouillage dans les moyens de verrouillage 30 de l'embout 3.

Cette étape de passage de l'élément expanseur 51 de la position repliée à la position déployée est possible du fait que, simultanément, l'élément d'activation 52 est translaté selon l'axe Z de sorte à venir en regard de l'embout 3 prédéterminé.

En d'autres termes, selon le procédé présenté dans ce mode de réalisation, en passant par la deuxième ouverture 102, cet élément d'activation 52 rend possible le passage de l'élément expanseur 51 de la position repliée à la position déployée.

Enfin, la figure 5c illustre l'étape d'extraction de l'embout 3 par translation du porte embout 4 selon l'axe Z jusqu'à ce que le porte embout 4 soit à distance du boîtier d'embout 1.

L'outil est ensuite fonctionnel pour effectuer la tâche pour laquelle avait été déterminé l'embout récupéré dans le boîtier 1.

Une fois la tâche achevée, il est nécessaire de retirer l'embout de l'outil pour, par exemple, ranger l'outil ou changer d'embout.

Pour ce faire, le procédé comprend en outre les étapes successives suivantes, pour retirer l'embout 3 de l'outil 9 :
- une étape de positionnement du porte-embout 4 à la verticale de la deuxième portion de l'ouverture 101 associée à l'embout 3, de sorte que l'élément d'activation 52 soit au niveau de la surface supérieure d'appui 10;
- une troisième étape de translation du porte embout 4 selon l'axe de translation X du support d'embout 2, jusqu'à ce que le porte-embout 4 soit positionné en regard de la première portion de l'ouverture 100 et du support d'embout 2;
- une quatrième étape de translation du porte embout selon l'axe Z de sorte à ce que l'embout 3 maintenu sur l'outil soit placé sur le support d'embout 2 associé ;
- une étape de dépose de l'embout 3 sur le support d'embout 2 associé ;
- une cinquième étape de translation du porte embout 4 selon l'axe Z jusqu'à ce que le porte embout 4 soit à distance du boîtier d'embout 1.

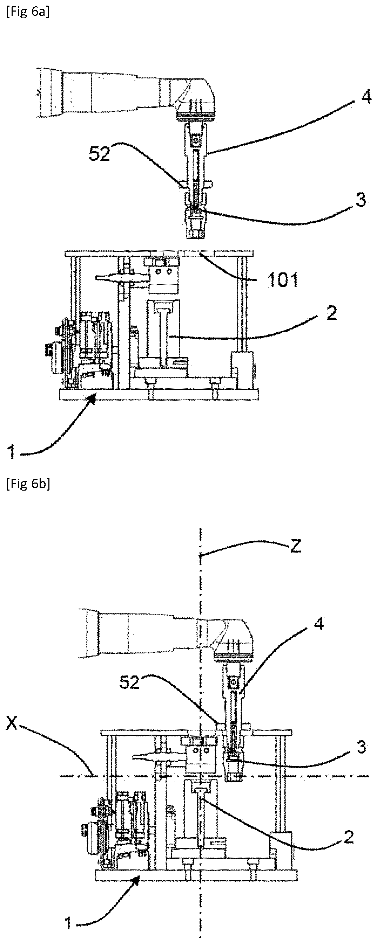

On détaille ci-après les différentes étapes du procédé selon l'invention, pour retirer l'embout 3 de l'outil une fois la tâche achevée, à l'appui des figures 6a à 7b.

Les figures 6a et 6b illustrent l'étape de positionnement du porte-embout 4 à la verticale de la deuxième portion de l'ouverture 101 associée à l'embout 3 prédéterminé, de sorte que l'élément d'activation 52 soit au niveau de la surface supérieure d'appui 10, puis la troisième étape de translation du porte embout 4 selon l'axe de translation X du support d'embout 2 jusqu'à ce que le porte-embout 4 soit positionné en regard de la première portion de l'ouverture 100 et du support d'embout 2.

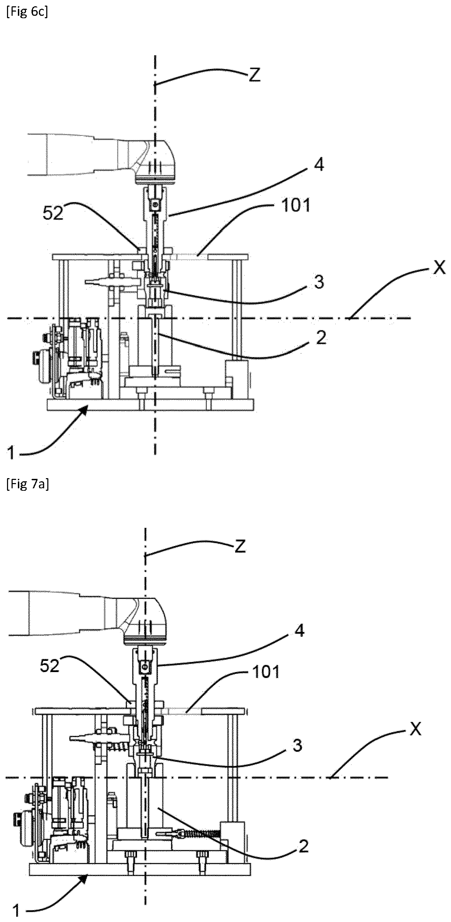

La figure 6c illustre la quatrième étape de translation du porte embout 4 selon l'axe Z de sorte à ce que l'embout 3 prédéterminé soit placé sur le support d'embout 2 associé.

La figure 7a illustre quant à elle l'étape de dépose de l'embout 3 sur le support d'embout 2 associé.

Pour ce faire, le support d'embout peut comporter des moyens de retenue de l'embout. Par exemple, le support d'embout peut comporter une fourchette de retenue de l'embout munie d'un ressort de tension, configurée pour retenir l'embout sur le support d'embout lorsque le porte embout remonte

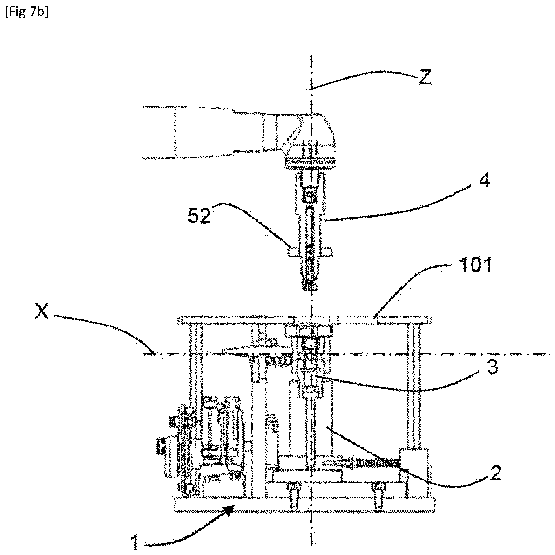

Enfin, la figure 7b illustre la cinquième étape de translation du porte embout 4 selon l'axe Z jusqu'à ce que le porte embout 4 soit à distance du boîtier d'embout 1.

## Revendications

1. Système de fixation d'un embout (3) d'outillage à un outil (9) présentant un axe de rotation (Z) pour le travail de l'embout (3), ledit système comprenant:
- un boîtier à embouts (1) comprenant une pluralité de supports d'embouts (2), lesdits supports d'embouts (2) étant mobiles et portant chacun un embout (3), chaque embout (3) présentant une première extrémité de travail et une deuxième extrémité ;
- un porte embout (4) présentant une première extrémité (40) apte à être solidarisée à une extrémité dudit outil (9) et une deuxième extrémité (41) configurée pour être solidarisée avec ladite deuxième extrémité de chacun desdits embouts (3) ;
- des moyens de solidarisation réversibles (50, 51, 52) dudit embout audit porte embout (4),
ledit embout (3) pouvant prendre au moins deux états par rapport audit porte embout (4) :
- un état verrouillé dans lequel ledit embout (3) est engagé sur ledit porte embout (4) et est à distance dudit support d'embout (2), et
- un état libéré dans lequel ledit embout (3) est à distance dudit porte embout (4) et repose sur ledit support d'embout (2),
**caractérisé en ce que**
le passage dudit état libéré audit état verrouillé se faisant par la combinaison d'un premier mouvement selon l'axe (Z) de rotation de l'outil dudit porte embout (4) vers ledit support d'embout (2) de sorte à ce que ledit porte embout (4) soit solidarisé audit embout (3), et d'un deuxième mouvement dudit porte embout (4) entrainant avec lui ledit support d'embout (2), de sorte à ce que l'embout (3) soit verrouillé sur ledit porte embout (4).

2. Système de fixation selon la revendication 1, **caractérisé en ce que** lesdits supports d'embouts (2) sont montés mobiles en translation dans un plan (P) perpendiculaire à l'axe (Z) de rotation de l'outil, le passage dudit état libéré audit état verrouillé se faisant par la combinaison d'une translation dudit porte embout (4) selon l'axe (Z), et d'une translation dans le plan P, entrainant avec lui ledit support d'embout (2), de sorte à ce que ledit porte embout (4) vienne en vis-à-vis dudit support d'embout (2) et que l'embout (3) soit engagé et verrouillé sur ledit porte embout (4).

3. Système de fixation selon la revendication 1 ou 2, **caractérisé en ce que** ledit porte embout est monté mobile en translation selon un axe (X) perpendiculaire à l'axe (Z), le passage dudit état libéré audit état verrouillé se faisant par la combinaison d'une translation dudit porte embout (4) selon l'axe (Z), et d'une translation selon l'axe (X), entrainant avec lui ledit support d'embout (2), de sorte à ce que ledit porte embout (4) vienne en vis-à-vis dudit support d'embout (2) et que l'embout (3) soit engagé et verrouillé sur ledit porte embout (4).

4. Système de fixation selon l'une des revendications 1 à 3, **caractérisé en ce que** lesdits moyens de solidarisation réversibles comprennent :
- un élément de verrouillage (50) ménagé dans ledit porte embout (4) et mobile entre au moins une position libérée dans laquelle il n'agit pas sur ledit embout (3), et une position de verrouillage dans laquelle il vient se loger dans des moyens de verrouillage (30) dudit embout (3), ledit élément de verrouillage (50) et lesdits moyens de verrouillage (30) dudit embout (3) présentant une forme complémentaire ;
- un élément expanseur (51) mobile entre au moins une position déployée dans laquelle il maintient l'élément de verrouillage (50) en position de verrouillage dans lesdits moyens de verrouillage (30) dudit embout (3), et une position repliée dans laquelle il n'agit pas sur ledit élément de verrouillage (50), et
- un élément d'activation (52) solidaire de l'élément expanseur (51) et ménagé sur le pourtour dudit porte embout (4).

5. Système de fixation selon la revendication 4, **caractérisé en ce que** ledit élément de verrouillage (50) comprend des billes ménagées dans le porte embout (4), sur le pourtour dudit élément expanseur (51).

6. Système de fixation l'une des revendications 4 ou 5, **caractérisé en ce que** ledit élément d'activation (52) est une bague ménagée sur le pourtour dudit porte embout (4) et solidaire dudit élément de verrouillage (50).

7. Système de fixation selon l'une des revendications 4 à 6, **caractérisé en ce que** ledit élément expanseur (51) comprend une tige mobile entre au moins une position déployée dans laquelle elle maintient l'élément de verrouillage (50) en position de verrouillage dans lesdits moyens de verrouillage (30) dudit embout (3), et une position repliée dans laquelle elle n'agit pas sur ledit élément de verrouillage (50).

8. Système de fixation selon l'une des revendications 4 à 7, **caractérisé en ce que** ledit boîtier à embouts (1) comporte une surface supérieure d'appui (10) sur laquelle sont formées des ouvertures ménagées chacune en vis-à-vis de chacun desdits embouts (3), chacune desdites ouvertures présentant :
- une première portion (100) ayant un diamètre inférieur à un diamètre dudit élément d'activation (52), et ayant un diamètre supérieur à un diamètre dudit embout (3) ;
- une deuxième portion (101) ménagée dans la continuité de ladite première portion (100) et ayant un diamètre supérieur à un diamètre dudit élément d'activation (52).

9. Système de fixation selon l'une des revendications précédentes, **caractérisé en ce que** le boîtier à embouts (1) comprend entre deux et huit supports d'embouts (2), préférentiellement quatre supports d'embouts (2).

10. Système de fixation selon l'une des revendications précédentes, **caractérisé en ce que** chacun des supports d'embout (2) comprend en outre au moins un capteur (23, 24) appartenant au groupe comprenant :
- un capteur de présente d'un embout en contact avec le support d'embout associé ;
- un capteur de détection de la position d'un embout par rapport à un porte embout ;
- un capteur de présence du support d'embout à la verticale de la première portion de l'ouverture, et
- un capteur de présence de l'embout à la verticale de la première portion de l'ouverture.

11. Procédé de fixation d'un embout d'outillage à un outil (9) mis en oeuvre par un système de fixation d'un embout d'outillage à un outil (9) selon la revendication 8, **caractérisé en ce qu'**il met en oeuvre les étapes successives suivantes :
- une étape de prédétermination d'un embout (3) à fixer sur le porte embout (4) ;
- une étape de positionnement dudit porte-embout (4) au contact de ladite surface supérieure d'appui (10), en vis-à-vis de la première portion (100) de l'ouverture correspondant à l'embout prédéterminé, de sorte à être à la verticale dudit embout (3) ;
- une première étape de translation dudit porte embout selon ledit axe (Z) de sorte à ce que ladite deuxième extrémité (41) dudit porte embout (4) soit solidarisée avec ladite deuxième extrémité de l'embout prédéterminé, ledit élément d'activation (52) restant au contact de ladite surface supérieure d'appui (10) ;
- simultanément, une étape de passage de l'élément de verrouillage (50) à ladite position libérée dans laquelle il vient se loger dans des moyens de verrouillage (30) dudit embout (3) prédéterminé ;
- une deuxième étape de déplacement dudit porte embout (4), ledit porte embout entrainant dans son mouvement ledit support d'embout (2) et ledit embout (3) prédéterminé jusqu'à ce que ledit porte-embout et ledit embout soient positionnés en regard de ladite deuxième portion (101) de l'ouverture ;
- une étape de passage de l'élément expanseur (51) de ladite position repliée à ladite position déployée dans laquelle il maintient l'élément de verrouillage (50) en position de verrouillage dans lesdits moyens de verrouillage (30) dudit embout (3) ledit élément d'activation (52) étant translaté simultanément selon l'axe (Z) de sorte à venir en regard dudit embout (3) prédéterminé,
- une étape d'extraction de l'embout (3) par translation dudit porte embout (4) selon ledit axe (Z) jusqu'à ce que ledit porte embout (4) soit à distance dudit boîtier d'embout (1).

12. Procédé de fixation d'un embout (3) d'outillage audit outil (9) selon la revendication 11, **caractérisé en ce qu'**il comprend en outre les étapes successives suivantes, pour retirer l'embout (3) dudit outil (9) :
- une étape de positionnement dudit porte-embout (4) à la verticale de ladite deuxième portion de l'ouverture (101) associée à l'embout (3), de sorte que ledit élément d'activation (52) soit au niveau de ladite surface supérieure d'appui (10);
- une troisième étape de déplacement dudit porte embout (4) jusqu'à ce que ledit porte-embout (4) soit positionné en regard de ladite première portion de l'ouverture (100) et dudit support d'embout (2) ;
- une quatrième étape de translation dudit porte embout selon ledit axe (Z) de sorte à ce que ledit embout (3) prédéterminé soit placé sur le support d'embout (2) associé ;
- une étape de dépose dudit embout (3) sur ledit support d'embout (2) associé ;
- une cinquième étape de translation dudit porte embout (4) selon ledit axe (Z) jusqu'à ce que ledit porte embout (4) soit à distance dudit boîtier d'embout (1).

## Patentansprüche

1. System zur Befestigung eines Werkzeugeinsatzes (3) an einem Werkzeug (9), das eine Drehachse (Z) für die Arbeit des Einsatzes (3) aufweist, wobei das System umfasst:
- ein Einsatzgehäuse (1), das mehrere Einsatzhalterungen (2) umfasst, wobei die Einsatzhalterungen (2) beweglich sind und jeweils einen Einsatz (3) tragen, wobei jeder Einsatz (3) ein erstes Arbeitsende und ein zweites Ende aufweist;
- einen Einsatzträger (4), der ein erstes Ende (40), das geeignet ist, fest mit einem Ende des Werkzeugs (9) verbunden zu sein, und ein zweites Ende (41) aufweist, das dazu ausgestaltet ist, fest mit dem zweiten Ende von jedem der Einsätze (3) verbunden zu sein;
- umkehrbare Mittel (50, 51, 52) zur festen des Einsatzes mit dem Einsatzträger (4),
wobei der Einsatz (3) mindestens zwei Zustände in Bezug auf den Einsatzträger (4) einnehmen kann:
- einen verriegelten Zustand, in dem der Einsatz (3) an dem Einsatzträger (4) in Eingriff ist und sich in einem Abstand von der Einsatzhalterung (2) befindet, und
- einen befreiten Zustand, in dem der Einsatz (3) sich in einem Abstand von dem Einsatzträger (4) befindet und auf der Einsatzhalterung (2) ruht,
**dadurch gekennzeichnet, dass** der Übergang vom befreiten Zustand in den verriegelten Zustand durch die Kombination einer ersten Bewegung des Einsatzträgers (4) entlang der Drehachse (Z) des Werkzeugs hin zu der Einsatzhalterung (2), derart dass der Einsatzträger (4) fest mit dem Einsatz (3) verbunden wird, und einer zweiten Bewegung des Einsatzträgers (4) erfolgt, der die Einsatzhalterung (2) mit sich mitnimmt, derart dass der Einsatz (3) an dem Einsatzträger (4) verriegelt wird.

2. System zur Befestigung nach Anspruch 1, **dadurch gekennzeichnet, dass** die Einsatzhalterungen (2) in einer Ebene (P) senkrecht zur Drehachse (Z) des Werkzeugs translatorisch beweglich gelagert sind, wobei der Übergang vom befreiten Zustand in den verriegelten Zustand durch die Kombination einer Translation des Einsatzträgers (4) entlang der Achse (Z) und einer Translation in der Ebene P, wobei er die Einsatzhalterung (2) mit sich mitnimmt, erfolgt, derart dass der Einsatzträger (4) gegenüber die Einsatzhalterung (2) gelangt und dass der Einsatz (3) an dem Einsatzträger (4) in Eingriff gelangt und daran verriegelt wird.

3. System zur Befestigung nach Anspruch 1 oder 2, **dadurch gekennzeichnet, dass** der Einsatzträger entlang einer Achse (X) senkrecht zur Achse (Z) translatorisch beweglich gelagert ist, wobei der Übergang vom befreiten Zustand in den verriegelten Zustand durch die Kombination einer Translation des Einsatzträgers (4) entlang der Achse (Z) und einer Translation entlang der Achse (X), wobei er die Einsatzhalterung (2) mit sich mitnimmt, erfolgt, derart dass der Einsatzträger (4) gegenüber die Einsatzhalterung (2) gelangt und dass der Einsatz (3) an dem Einsatzträger (4) in Eingriff gelangt und daran verriegelt wird.

4. System zur Befestigung nach einem der Ansprüche 1 bis 3, **dadurch gekennzeichnet, dass** die umkehrbaren Mittel zur festen Verbindung umfassen:
- ein Verriegelungselement (50), das in dem Einsatzträger (4) eingerichtet und zwischen mindestens einer befreiten Position, in der es nicht auf den Einsatz (3) einwirkt, und einer Verriegelungsposition beweglich ist, in der es sich in den Verriegelungsmitteln (30) des Einsatzes (3) einsetzt, wobei das Verriegelungselement (50) und die Verriegelungsmittel (30) des Einsatzes (3) eine ergänzende Form aufweisen;
- ein Dehnelement (51), das zwischen mindestens einer ausgezogenen Position, in der es das Verriegelungselement (50) in den Verriegelungsmitteln (30) des Einsatzes (3) in der Verriegelungsposition hält, und einer eingezogenen Position beweglich ist, in der es nicht auf das Verriegelungselement (50) einwirkt, und
- ein Aktivierungselement (52), das fest mit dem Dehnelement (51) verbunden ist und auf dem Umkreis des Einsatzträgers (4) eingerichtet ist.

5. System zur Befestigung nach Anspruch 4, **dadurch gekennzeichnet, dass** das Verriegelungselement (50) Kugeln umfasst, die in dem Einsatzträger (4) auf dem Umkreis des Dehnelements (51) eingerichtet sind.

6. System zur Befestigung nach einem der Ansprüche 4 oder 5, **dadurch gekennzeichnet, dass** das Aktivierungselement (52) ein Ring ist, der auf dem Umkreis des Einsatzträgers (4) eingerichtet und fest mit dem Verriegelungselement (50) verbunden ist.

7. System zur Befestigung nach einem der Ansprüche 4 bis 6, **dadurch gekennzeichnet, dass** das Dehnelement (51) eine Stange umfasst, die zwischen mindestens einer ausgezogenen Position, in der sie das Verriegelungselement (50) in den Verriegelungsmitteln (30) des Einsatzes (3) in der Verriegelungsposition hält, und einer eingezogenen Position beweglich ist, in der sie nicht auf das Verriegelungselement (50) einwirkt.

8. System zur Befestigung nach einem der Ansprüche 4 bis 7, **dadurch gekennzeichnet, dass** das Einsatzgehäuse (1) eine obere Auflagefläche (10) umfasst, auf der Öffnungen gebildet sind, die jeweils gegenüber jedem der Einsätze (3) eingerichtet sind, wobei jede der Öffnungen aufweist:
- einen ersten Abschnitt (100), der einen Durchmesser aufweist, der kleiner als ein Durchmesser des Aktivierungselements (52) ist, und einen Durchmesser aufweist, der größer als ein Durchmesser des Einsatzes (3) ist;
- einen zweiten Abschnitt (101), der in der Fortsetzung des ersten Abschnitts (100) eingerichtet ist und einen Durchmesser aufweist, der größer als ein Durchmesser des Aktivierungselements (52) ist.

9. System zur Befestigung nach einem der vorhergehenden Ansprüche, **dadurch gekennzeichnet, dass** das Einsatzgehäuse (1) zwischen zwei und acht Einsatzhalterungen (2), vorzugsweise vier Einsatzhalterungen (2), umfasst.

10. System zur Befestigung nach einem der vorhergehenden Ansprüche, **dadurch gekennzeichnet, dass** jede der Einsatzhalterungen (2) ferner mindestens einen Sensor (23, 24) umfasst, der zu der Gruppe gehört, die umfasst:
- einen Sensor für das Vorhandensein eines Einsatzes, der mit der zugehörigen Einsatzhalterung in Kontakt ist;
- einen Sensor zur Feststellung der Position eines Einsatzes in Bezug auf einen Einsatzträger;
- einen Sensor für das Vorhandensein der Einsatzhalterung in der Vertikalen des ersten Abschnitts der Öffnung, und
- einen Sensor für das Vorhandensein des Einsatzes in der Vertikalen des ersten Abschnitts der Öffnung.

11. Verfahren zur Befestigung eines Werkzeugeinsatzes an einem Werkzeug (9), das durch ein System zur Befestigung eines Werkzeugeinsatzes an einem Werkzeug (9) nach Anspruch 8 durchgeführt wird, **dadurch gekennzeichnet, dass** es die folgenden aufeinanderfolgenden Schritte durchführt:
- einen Schritt des Vorbestimmens eines an dem Einsatzträger (4) zu befestigenden Einsatzes (3);
- einen Schritt des Positionierens des Einsatzträgers (4) im Kontakt mit der oberen Auflagefläche (10) gegenüber dem ersten Abschnitt (100) der Öffnung, die dem vorbestimmten Einsatz entspricht, derart dass er sich in der Vertikalen des Einsatzes (3) befindet;
- einen ersten Schritt der Translation des Einsatzträgers entlang der Achse (Z), derart dass das zweite Ende (41) des Einsatzträgers (4) fest mit dem zweiten Ende des vorbestimmten Einsatzes verbunden wird, wobei das Aktivierungselement (52) im Kontakt mit der oberen Auflagefläche (10) bleibt;
- gleichzeitig, einen Schritt des Übergangs des Verriegelungselements (50) in die befreite Position, in der es in Verriegelungsmitteln (30) des vorbestimmten Einsatzes (3) eingesetzt wird;
- einen zweiten Schritt des Verlagerns des Einsatzträgers (4), wobei der Einsatzträger in seiner Bewegung die Einsatzhalterung (2) und den vorbestimmten Einsatz (3) mitnimmt, bis der Einsatzträger und der Einsatz dem zweiten Abschnitt (101) der Öffnung gegenüberliegend positioniert sind;
- einen Schritt des Übergangs des Dehnelements (51) von der eingezogenen Position in die ausgezogene Position, in der es das Verriegelungselement (50) in den Verriegelungsmitteln (30) des Einsatzes (3) in der Verriegelungsposition hält, wobei das Aktivierungselement (52) gleichzeitig derart entlang der Achse (Z) translatorisch bewegt wird, dass es dem vorbestimmten Einsatz (3) gegenüberliegend gelangt,
- einen Schritt des Abziehens des Einsatzes (3) durch Translation des Einsatzträgers (4) entlang der Achse (Z), bis der Einsatzträger (4) sich in einem Abstand von dem Einsatzgehäuse (1) befindet.

12. Verfahren zur Befestigung eines Werkzeugeinsatzes (3) an dem Werkzeug (9) nach Anspruch 11, **dadurch gekennzeichnet, dass** es ferner die folgenden aufeinanderfolgenden Schritte umfasst, um den Einsatz (3) von dem Werkzeug (9) zu entfernen:
- einen Schritt des Positionierens des Einsatzträgers (4) in der Vertikalen des zweiten Abschnitts der Öffnung (101), die dem Einsatz (3) zugehörig ist, derart dass das Aktivierungselement (52) sich im Bereich der oberen Auflagefläche (10) befindet;
- einen dritten Schritt des Verlagerns des Einsatzträgers (4), bis der Einsatzträger (4) dem ersten Abschnitt der Öffnung (100) und der Einsatzhalterung (2) gegenüberliegend positioniert ist;
- einen vierten Schritt der Translation des Einsatzträgers entlang der Achse (Z), derart dass der vorbestimmte Einsatz (3) an der zugehörigen Einsatzhalterung (2) platziert ist;
- einen Schritt des Ausbaus des Einsatzes (3) an der zugehörigen Einsatzhalterung (2);
- einen fünften Schritt der Translation des Einsatzträgers (4) entlang der Achse (Z), bis der Einsatzträger (4) sich in einem Abstand von dem Einsatzgehäuse (1) befindet.

## Claims

1. System for fixing a tooling bit (3) to a tool (9) having an axis of rotation (Z) for working the bit (3), said system comprising:
- a bit box (1) comprising a plurality of bit supports (2), said bit supports (2) being movable and each carrying a bit (3), each bit (3) having a first working end and a second end;
- a bit holder (4) having a first end (40) able to be secured to one end of said tool (9) and a second end (41) configured to be secured to said second end of each of said bits (3);
- reversible securing means (50, 51, 52) for securing said bit to said bit holder (4),
said bit (3) being able to assume at least two states with respect to said bit holder (4):
- a locked state wherein said bit (3) is engaged on said bit holder (4) and is at a distance from said bit support (2), and
- a released state wherein said bit (3) is at a distance from said bit holder (4) and rests on said bit support (2),
**characterized in that**
switching from said released state to said locked state being made by the combination of a first movement along the axis (Z) of rotation of the tool of said bit holder (4) towards said bit support (2) so that said bit holder (4) is fixed to said bit (3), and a second movement of said bit holder (4) carrying with it said bit support (2), so that the bit (3) is locked on said bit holder (4).

2. System for fixing according to claim 1, **characterized in that** said bit supports (2) are mounted to move in translation in a plane (P) perpendicular to the axis (Z) of rotation of the tool, switching from said released state to said locked state being made by the combination of a translation of said bit holder (4) along the axis (Z), and a translation in the plane P, carrying with it said bit support (2), so that said bit holder (4) faces said bit support (2) and the bit (3) is engaged and locked on said bit holder (4).

3. System for fixing according to claim 1 or 2, **characterized in that** said bit holder is mounted to move in translation along an axis (X) perpendicular to the axis (Z), switching from said released state to said locked state being made by the combination of a translation of said bit holder (4) along the axis (Z), and a translation along the axis (X), carrying with it said bit support (2), so that said bit holder (4) faces said bit support (2) and that the bit (3) is engaged and locked on said bit holder (4).

4. System for fixing according to one of claims 1 to 3, **characterized in that** said reversible securing means comprise:
- a locking element (50) arranged in said bit holder (4) and movable between at least one released position wherein it does not act on said bit (3), and a locking position wherein it is housed in locking means (30) of said bit (3), said locking element (50) and said locking means (30) of said bit (3) having a complementary shape;
- an expander element (51) movable between at least one deployed position wherein it holds the locking element (50) in the locking position in said locking means (30) of said bit (3), and a folded position wherein it does not act on said locking element (50), and
- an activation element (52) secured to the expander element (51) and arranged on the periphery of said bit holder (4).

5. System for fixing according to claim 4, **characterized in that** said locking element (50) comprises balls provided in the bit holder (4), on the periphery of said expander element (51).

6. System for fixing according to one of claims 4 or 5, **characterized in that** said activation element (52) is a ring arranged on the periphery of said bit holder (4) and secured to said locking element (50).

7. System for fixing according to one of claims 4 to 6, **characterized in that** said expander element (51) comprises a rod movable between at least one deployed position wherein it holds the locking element (50) in locking position in said locking means (30) of said bit (3), and a folded position wherein it does not act on said locking element (50).

8. System for fixing according to one of claims 4 to 7, **characterized in that** the said bit box (1) includes an upper bearing surface (10) on which are formed openings each arranged facing each of said bits (3), each of said openings having:
- a first portion (100) having a diameter less than a diameter of said activation element (52), and having a diameter greater than a diameter of said bit (3);
- a second portion (101) formed in the continuity of said first portion (100) and having a diameter greater than a diameter of said activation element (52).

9. System for fixing according to one of the preceding claims, **characterized in that** the bit box (1) comprises between two and eight bit supports (2), preferably four bit supports (2).

10. System for fixing according to one of the preceding claims, **characterized in that** each of the bit supports (2) further comprises at least one sensor (23, 24) belonging to the group comprising:
- a sensor for the presence of a bit in contact with the associated bit support;
- a sensor for detecting the position of a bit relative to a bit holder;
- a sensor for the presence of the bit support vertically to the first portion of the opening, and
- a sensor for the presence of the bit vertically to the first portion of the opening.

11. Method for fixing a tooling bit to a tool (9) implemented by a system for fixing a tooling bit to a tool (9) according to claim 8, **characterized in that** it implements the following successive steps:
- a step of predetermining a bit (3) to be fixed on the bit holder (4);
- a step of positioning said bit holder (4) in contact with said upper bearing surface (10), facing the first portion (100) of the opening corresponding to the predetermined bit, so as to be vertical to said bit (3);
- a first step of translating said bit holder along said axis (Z) so that said second end (41) of said bit holder (4) is secured to said second end of the predetermined bit, said activation element (52) remaining in contact with said upper bearing surface (10);
- simultaneously, a step of switching the locking element (50) to said released position wherein it comes to be housed in locking means (30) of said predetermined bit (3);
- a second step of moving said bit holder (4), said bit holder driving in its movement said bit support (2) and said predetermined bit (3) until said bit holder and said bit are positioned facing said second portion (101) of the opening;
- a step of switching of the expander element (51) from said folded position to said deployed position wherein it holds the locking element (50) in the locking position in said locking means (30) of said bit (3) said activation element (52) being translated simultaneously along the axis (Z) so as to face said predetermined bit (3),
- a step of extracting the bit (3) by translating said bit holder (4) along said axis (Z) until said bit holder (4) is at a distance from said bit box (1).

12. Method for fixing a tooling bit (3) to said tool (9) according to claim 11, **characterized in that** it further comprises the following successive steps, to remove the bit (3) from said tool (9):
- a step of positioning said bit holder (4) vertically to said second portion of the opening (101) associated with the bit (3), so that said activation element (52) is at said upper bearing surface (10);
- a third step of moving said bit holder (4) until said bit holder (4) is positioned facing said first portion of the opening (100) and said bit support (2);
- a fourth step of translating said bit holder along said axis (Z) so that said predetermined bit (3) is placed on the associated bit support (2);
- a step of depositing said bit (3) on said associated bit support (2);
- a fifth step of translating said bit holder (4) along said axis (Z) until said bit holder (4) is at a distance from said bit box (1).
